# EUROPEAN PATENT SPECIFICATION

(11) **EP 3 423 710 B1**
(45) Date of publication and mention of the grant of the patent: **27.01.2021**
(21) Application number: 17759324.1
(22) Date of filing: 27.02.2017
(51) Int. Cl.: F03D 9/00, F03D 9/18, H02S 10/12, H02S 40/22, H02S 40/44, F24S 20/25, F24S 30/45, F24S 60/30, F24S 90/00

(54) **A COMBINED SOLAR AND WIND ENERGY COLLECTING APPARATUS**
KOMBINIERTE SOLAR- UND WINDENERGIEGEWINNUNGSVORRICHTUNG
APPAREIL COMBINÉ COLLECTANT LES ÉNERGIES SOLAIRE ET ÉOLIENNE

(30) Priority: 01.03.2016 FI 20165158
(43) Date of publication of application: 09.01.2019
(73) Proprietor: Amirlatifi, Ali, 33400 Tampere (FI); Amirlatifi, Taru, 33400 Tampere (FI)
(72) Inventor: Amirlatifi, Ali, 33400 Tampere (FI); Amirlatifi, Taru, 33400 Tampere (FI)
(74) Representative: Berggren Oy, Tampere
(86) International application number: PCT/FI2017/050125
(87) International publication number: WO 2017/149198

(56) References cited:
- WO-A1-2014/123586
- WO-A1-2014/123586
- WO-A1-2014/199311
- CN-U- 201 887 689
- CN-U- 201 887 689
- JP-A- H08 128 383
- JP-A- 2009 231 315
- US-A1- 2009 261 595
- US-A1- 2011 215 583
- US-A1- 2015 244 304
- US-B1- 7 008 171
- US-B1- 8 196 572

## Description

A combined solar and wind energy collecting apparatus The invention relates to a combined solar and wind energy collecting apparatus as defined in claim 1.

Demand for use of renewable energy is continuously increasing. However, the use of solar and wind energy by collectors on relatively small buildings or estates is possible with the systems in existence to an insufficient degree. There is particularly a lack of systems that can be set flexibly to changing conditions and in different kinds of environments.

Patent US 8,783,033 discloses a wind and radiation energy collector device, having a solar radiation energy collector comprising an absorber and a reflector element. The reflector element collects solar radiation and directs the radiation at the absorber. The device has also a built-in wind wheel assembly, which is arranged in a direction opposite to the receiving direction of the solar radiation energy collector. The device with the solar radiation energy collector and the wind wheel assembly is movably supported, so that the device can be oriented either with the solar radiation energy collector facing the sun or with the wind wheel assembly against the prevailing wind direction. In addition, the device comprises solar panels for converting solar energy into electricity. The solar panels are coupled with edges of the device in an articulated manner and folded out such that the electric energy can be obtained by the solar panels being oriented toward the sun.

A combined energy collecting device according to the above patent is not very efficient due to being based on manual orientation of its different parts toward the sun or according to the direction of wind, in which context also adjustment of the positions of the foldable solar panels requires separate manual measures. In this device, the solar radiation reflector element is used to direct the radiation at the absorber by means of which the radiation energy is converted into heat through a fluid passing through the absorber.

The solution according to US 8,783,033 does not satisfy requirements for converting wind and solar energy efficiently enough in order to minimize the measures to keep simultaneously both the solar energy and wind energy collecting processes of the device working in an optimized manner.

On the other hand, US patent 9,236,751 discloses a portable modular sun-tracking solar energy receiver system that has plurality of solar cells for converting solar energy into DC-voltage. A solar tracking mechanism enables the solar energy receiver to track the position of the sun with respect to the solar cells and to position the solar cells responsive thereto. The system has a power circuitry that generates at least one output voltage to power an electronic device responsive to the DC-voltage. The system is provided with a housing that contains each of the solar energy receiver, the solar tracking mechanism and the power circuitry in a portable configuration.

The above solution has the advantage of keeping the solar cells in optimum position with respect to the sun thus making possible easy and efficient converting of solar energy by means of a compact portable device in a self sufficient operating manner. This solution does not, however, provide means to enable converting force of wind into electricity.

Furthermore document WO2014/199311 discloses a combined solar and wind energy collecting apparatus, which has a wind unit with a rotor arrangement, a generator arrangement and a solar unit with a solar radiation collector arrangement for converting solar radiation into electricity. A rotor of the rotor arrangement rotates around a vertical center axis of the apparatus, and the solar unit with the solar radiation collector arrangement is placed on top of the wind unit. The solar radiation collector arrangement comprises a rotationally symmetrical solar radiation collector surface, the horizontal cross-section of which diminishes conically upward along the vertical center line. This apparatus is bases on an advantageous principle, but it doesn't offer an efficient enough solution in practice for taking advantage of total solar energy Further prior art is known from JPH08128383A.

Despite all development that has taken place during the recent years, the exploitation of both wind and solar energy by means of existing combined wind and solar energy collector apparatuses is not at present at an adequately satisfactory level due to the problems involved with all prior art solutions.

It is an aim of the combined solar and wind energy collecting apparatus according to the present invention to achieve a decisive improvement in the problems described above and thus to raise essentially the level of prior art. In order to carry out this aim, the apparatus according to the invention is mainly characterized by what has been defined in the characterizing part of the independent claim directed thereto.

The scope of protection of the present invention is defined by the appended claims.

As the most important advantages of the combined solar and wind energy collecting apparatus according to the invention may be mentioned simplicity and efficiency of its construction and use, whereby a very compact combined energy collector apparatus is made possible in a way that a maximum amount of energy can be collected with a minimum need for manual adjustments as well as maintenance and service in use of the apparatus.

The advantages of the present invention are thanks to the very compact structure of the apparatus, having the wind unit with at least one rotor of the rotor arrangement rotating around a vertical center axis of the apparatus, and the solar unit with the solar radiation collector arrangement, being placed stationarily on top of the wind unit, wherein the solar radiation collector arrangement comprises a solar radiation collector surface the horizontal cross-section of which diminishes essentially conically, hemispherically or in a corresponding manner upward along the vertical center line. Thanks to the above, the solar radiation collector arrangement is immovable and at all times exposed to direct solar radiation from every direction.

Thanks to the invention, utilization of the solar energy can be further enhanced by using a solar radiation reflector assembly around the solar unit that has an opening making possible shadeless radiation onto a solar cell assembly, being placed on top of the solar radiation collector surface. The solar radiation reflector assembly is arranged rotatable around the solar unit in a controlled manner by means of positioning means that maintain the direction of the opening of the solar radiation reflector assembly toward the sun. Thanks to the above, a maximum and shadeless solar radiation is directed at the solar unit.

Other advantageous embodiments of the combined solar and wind energy collecting apparatus according to the invention have been presented in the dependent claims directed thereto.

In the following description, the invention is depicted in detail with reference to the appended drawings, in which:
- in figure 1: is shown a perspective view of an advantageous combined solar and wind energy collecting apparatus according to the invention,
- in figure 2: is shown an alternative embodiment of a combined solar and wind energy collecting apparatus according to the invention with respect to the one shown in figure 1,
- in figure 3: is shown a partial longitudinal cross section of the combined apparatus according to the invention of the type as shown in figure 1,
- in figures 4a and 4b: are shown perspective views of an absorbing and a magnifying assembly in order to increase heating effect of the solar radiation directed to the solar unit, and
- in figures 5a and 5b: are shown exemplary advantageous small scale and large scale uses of the combined apparatus according to the invention.

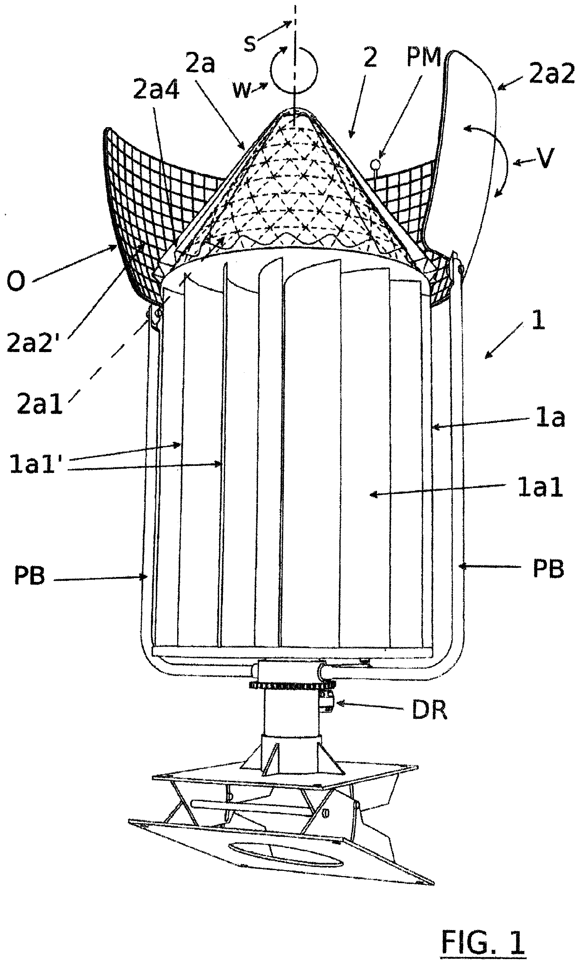

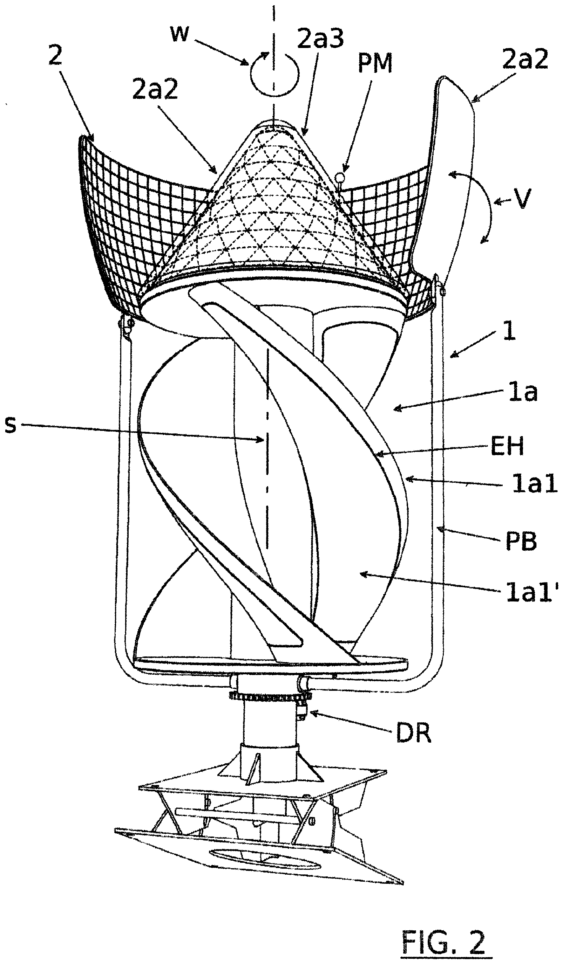

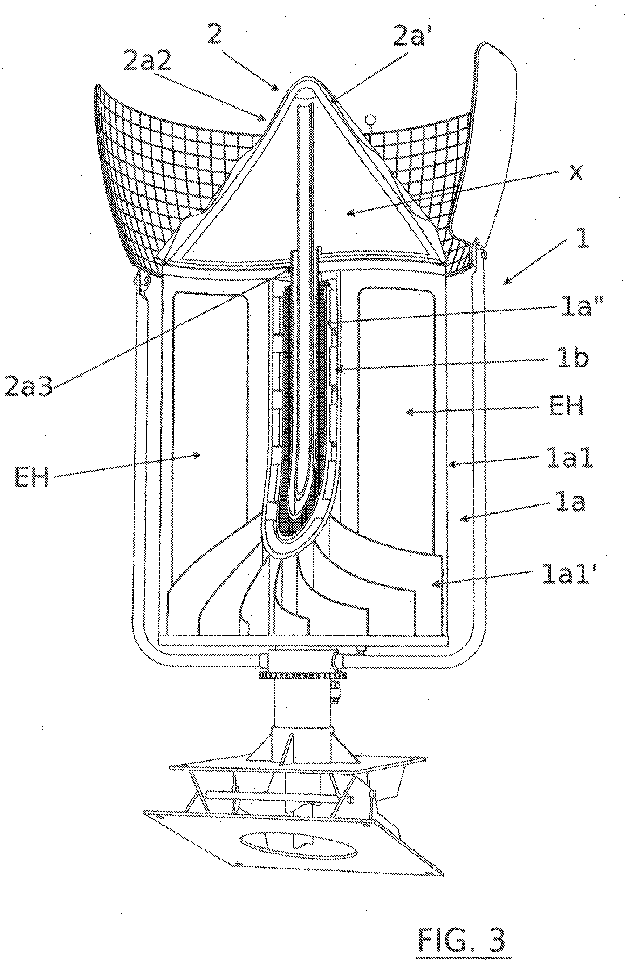

The invention relates to a combined solar and wind energy collecting apparatus, which has in a built-in manner a wind unit 1 for converting force of the wind into electricity by means of a rotor arrangement 1a and a generator arrangement 1b converting rotating motion w of the rotor arrangement 1a into electricity, and a solar unit 2 for converting solar radiation into electricity and/or into recoverable heat by means of a solar radiation collector arrangement 2a. With reference to the advantageous alternative embodiments shown in figures 1 and 2, the rotor arrangement 1a discloses at least one rotor 1a1 rotatable w around a vertical center axis s of the apparatus, wherein the solar unit 2 with the solar radiation collector arrangement 2a is arranged on top of the wind unit 1. The solar radiation collector arrangement 2a comprises a rotationally symmetrical solar radiation collector surface 2a', the horizontal cross-section of which diminishes essentially conically, hemispherically or in a corresponding manner upward along the vertical center line s. With reference to figures 1 and 2, the solar radiation collector arrangement 2a of the solar unit 2 comprises furthermore a solar cell assembly 2a1 on the solar radiation collection surface 2a'. With reference to figure 3, the apparatus comprises furthermore a hollow liquid space x inside the solar radiation collector arrangement 2a in order to recover solar radiation originated heat in the internal liquid space into liquid, such as e.g. water.

As an advantageous embodiment of the combined solar and wind energy collecting apparatus according to the invention, the solar radiation collector arrangement 2a comprises furthermore with reference to figures 1-3 a solar radiation reflector assembly 2a2 disclosing in vertical plane at least partly around the solar unit 2 an arched and in three dimensions concave reflecting surface 2a2' for reflecting solar radiation toward the solar cell assembly 2a1.

As a furthermore advantageous embodiment of the combined solar and wind energy collecting apparatus according to the invention, the solar radiation reflector assembly 2a2, being rotatable V around the solar unit 2 by means of advantageously electrical driving means DR, comprises an opening 0 in order to make possible shadeless radiation onto the solar cell assembly 2a1. The driving means are coupled by power transmission bars PB with the reflector assembly 2a2 and powered in a self-sufficient manner by the generator arrangement 1b.

As a furthermore advantageous embodiment of the combined solar and wind energy collecting apparatus according to the invention, the solar radiation reflector assembly 2a2 comprises positioning means PM for maintaining the direction of the opening O of the solar radiation reflector assembly 2a2 toward the sun.

Furthermore as an advantageous embodiment of the combined solar and wind energy collecting apparatus according to the invention, with reference to figure 3, the generator arrangement 1b comprises actuator means for converting rotation energy into electricity in the wind unit 1 between the rotor 1a1 of the rotor arrangement 1a, having a vertical wing blade assembly, and a stationary frame la" at the center of the wind unit 1. In this context the actuator means of the generator arrangement 1b advantageously comprise a coil assembly between the rotor 1a1 and the stationary frame 1a" of the wind unit 1.

In this context as a furthermore advantageous embodiment, the solar radiation collector arrangement 2a comprises a piping 2a3 coupled with the internal liquid space x and passing inside the stationary frame 1a" of the wind unit 1 for removing of warmer liquid from the top of the internal liquid space and for bringing colder liquid at the bottom of the internal liquid space.

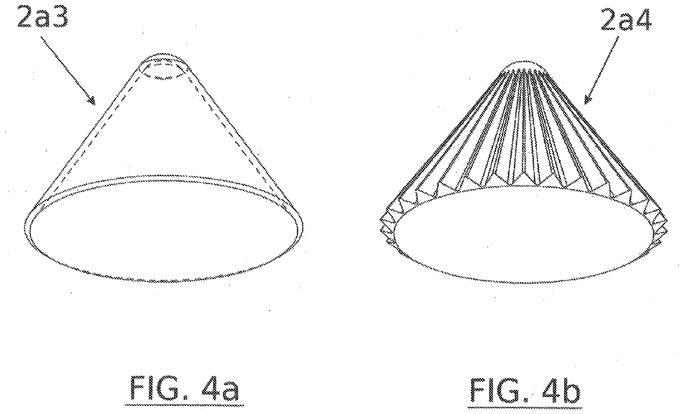

As a furthermore advantageous embodiment, the solar radiation collector arrangement 2a comprises, with reference to figure 4a, an e.g. essentially dark coloured absorbing and/or with reference to figure 4b an essentially light permeable magnifying 2a4 transmission assembly to be placed on top of the solar radiation collector surface 2a' in order to enhance solar radiation absorption by the solar unit surface and/or to increase heating effect of the solar radiation directed at the internal liquid space x.

As a further advantageous embodiment, the one or more vertical wing blades 1a1' of the rotor arrangement 1a advantageously comprise remotely controllable electric heating means EH in order to prevent the blades from getting frosted or frozen. For this purpose the apparatus has a power circuitry for operating the heating means EH through power generated by the generator arrangement 1b.

In the solution shown in figure 1, the wind unit comprises several in horizontal plane radially directed wing blades 1a1' with a curved shape, and the apparatus shown in figure 2 one or more spiral shaped blades 1a1'. Furthermore in figures 1 and 2, the apparatus is provided with a fastening assembly with tilting means in order to adjust the position of the apparatus depending on the angle of the ground on which the apparatus is to be installed.

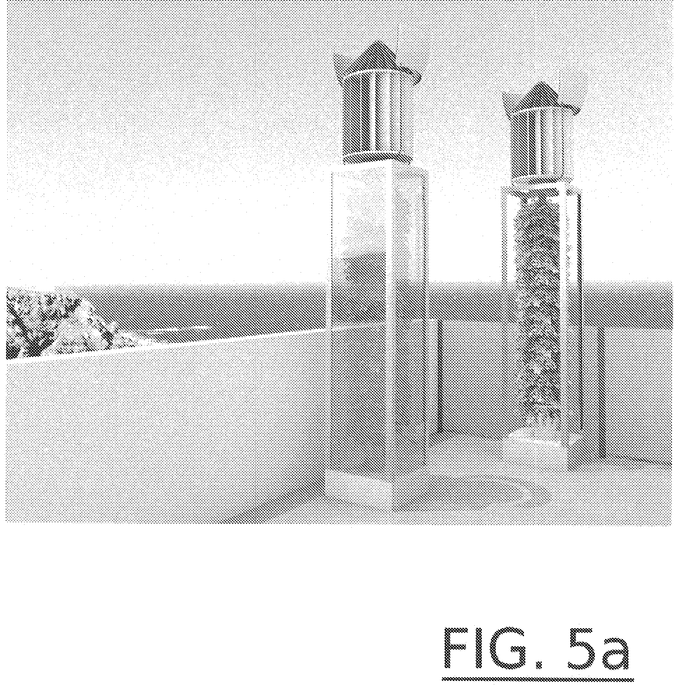

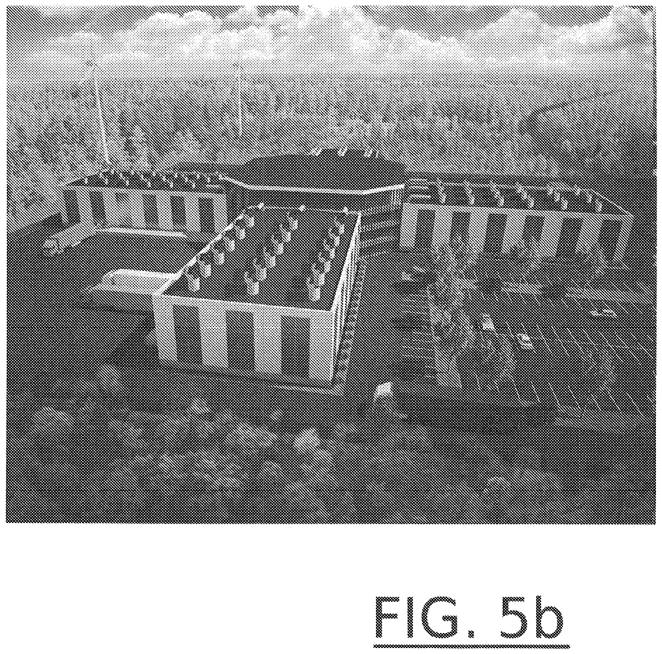

In figures 5a and 5b are shown furthermore two advantageous exemplary uses of the present invention on top of single plant cultivation apparatuses, forming thus a compact entirety together therewith. In addition to the small scale use in figure 5a, in figure 5b is shown a large scale use of a multitude of combined apparatuses according to the invention.

It is clear that the invention is not limited to the embodiments presented or described above, but instead, it can naturally be carried out for the part of its technical structures in very many ways. The solar cell assembly may comprise means for converting solar radiation energy either into electricity or into heat also through using some other heat exchange liquid than water.

Regarding the generator arrangement, it is clear that arrangements with brushes or without brushes can be exploited in connection with contact of the electric rotor in order to produce AC or DC current. Naturally the generator arrangement may comprise a traditional wired generator, being placed inside or outside the wind unit. The piping leading to the internal space inside the solar unit is carried out according to figure 3 by a center pipe and a channel surrounding the same, which can naturally be carried out with totally separate pipes. Furthermore, the materials of the transparent parts of the invention may be made of glass, plexiglass or any other light permeable material suitable for the purpose.

Furthermore the reflecting surface of the reflector assembly is advantageously made of many small mirrors or of whatever efficiently enough reflecting material. Regarding the rotor or turbine of the wind unit, the structures thereof can be made of composite materials, metal, such as aluminium, carbon fiber, PVC or the like. Furthermore the magnifying transmission assembly may comprise e.g. glass made of newly developed transparent solar glass technology, in which case the magnifying element may also collect electricity and pass the light further e.g. to a secondary solar cell panel of traditional type. Also the blades of the rotor can be made of material that collects CO₂ from the air while rotating, wherein CO₂ can be recovered e.g. by flushing the blades.

Furthermore the apparatus may comprise an accumulator or supercapacitor arrangement e.g. for storing energy in a large scale exploitation of the invention e.g. as shown in figure 5b, or for keeping up certain actions of the apparatus under windless nighttime circumstances like keeping up warming of the heating means of the wing blades in cold season.

## Claims

1. A combined solar and wind energy collecting apparatus, which has in a built-in manner a wind unit (1) for converting force of the wind into electricity by means of a rotor arrangement (1a) and a generator arrangement (1b) converting rotating motion (w) of the rotor arrangement (1a) into electricity, and a solar unit (2) for converting solar radiation at least into electricity by means of a solar radiation collector arrangement (2a), wherein the rotor arrangement (1a) discloses at least one rotor (1a1) rotatable (w) around a vertical center axis (s) of the apparatus, wherein the solar unit (2) having the solar radiation collector arrangement (2a) is arranged on top of the wind unit (1), and, wherein the solar radiation collector arrangement (2a) comprises a rotationally symmetrical solar radiation collector surface (2a'), the horizontal cross-section of which diminishes essentially conically or hemispherically upward along the vertical center line (s), wherein the combined solar and wind energy collecting apparatus is applicable for converting solar radiation into heat and electricity, wherein the solar radiation collector arrangement (2a) of the solar unit (2) comprises a solar cell assembly (2a1) on the solar radiation collection surface (2a'), and, wherein the apparatus comprises furthermore a hollow liquid space (x) inside the solar radiation collector arrangement (2a) in order to recover solar radiation originated heat in the internal liquid space into liquid, such as water, wherein the solar radiation collector arrangement (2a) comprises a piping (2a3) coupled with the internal liquid space (x) and passing inside a stationary frame (1a") of the wind unit (1) for removing of warmer liquid from the top of the internal liquid space and for bringing colder liquid at the bottom of the internal liquid space **characterized in that**, the combined solar and wind energy collecting apparatus is arranged on top of a plant cultivation apparatus and the internal liquid space is connected by a channel with a liquid heat exchanger for recovering the solar radiation originated heat into air.

2. A combined solar and wind energy collecting apparatus according to claim 1, **characterized in that**, the solar radiation collector arrangement (2a) comprises a solar radiation reflector assembly (2a2) disclosing in vertical plane at least partly around the solar unit (2) an arched and in three dimensions concave reflecting surface (2a2') for reflecting solar radiation toward the solar cell assembly (2a1).

3. A combined solar and wind energy collecting apparatus according to claim 2, **characterized in that**, the solar radiation reflector assembly (2a2), being rotatable (V) around the solar unit (2) by means of, preferably electrical, driving means (DR), comprises an opening (O) in order to make possible shadeless radiation onto the solar cell assembly (2a1).

4. A combined solar and wind energy collecting apparatus according to claim 3, **characterized in that**, the solar radiation reflector assembly (2a2) comprises positioning means (PM) for maintaining the direction of the opening (O) of the solar radiation reflector assembly (2a2) toward the sun.

5. A combined solar and wind energy collecting apparatus according to any of the preceding claims 1-4, **characterized in that**, the generator arrangement (1b) comprises actuator means for converting rotation energy into electricity in the wind unit (1) between the rotor (1a1) of the rotor arrangement (1a), having a vertical wing blade assembly, and the stationary frame (1a") at the center of the wind unit (1).

6. A combined solar and wind energy collecting apparatus according claim 5, **characterized in that**, the actuator means of the generator arrangement (1b) comprise a coil assembly between the rotor (1a1) and the stationary frame (1a") of the wind unit (1).

7. A combined solar and wind energy collecting apparatus according to any of the preceding claims 1-6, **characterized in that**, the solar radiation collector arrangement (2a) comprises an absorbing and/or magnifying (2a4) transmission assembly on top of the solar radiation collector surface (2a') in order to enhance solar radiation absorption by the solar unit surface and/or to increase heating effect of the solar radiation directed at the internal liquid space (x).

8. A combined solar and wind energy collecting apparatus according to any of the preceding claims 1-7, **characterized in that**, the one or more vertical wing blades (1a1') in the rotor (1a1) comprise, preferably remotely controllable, electric heating means (EH) in order to prevent the blades from getting frosted or frozen.

## Patentansprüche

1. Kombinierte Solar- und Windenergiekollektorvorrichtung, die auf eingebaute Weise eine Windeinheit (1) zum Umwandeln der Kraft des Windes in Elektrizität mittels einer Rotoranordnung (1a) und einer Generatoranordnung (1b) zum Umwandeln der Drehbewegung (w) der Rotoranordnung (1a) in Elektrizität und eine Solareinheit (2) zum Umwandeln von Sonnenstrahlung zumindest in Elektrizität mittels einer Sonnenstrahlungskollektoranordnung (2a) aufweist, wobei die Rotoranordnung (1a) mindestens einen Rotor (1a1) offenbart, der um eine vertikale Mittelachse (s) der Vorrichtung drehbar (w) ist,
wobei die Solareinheit (2) mit der Sonnenstrahlungskollektoranordnung (2a) oben auf der Windeinheit (1) angeordnet ist, und wobei die Sonnenstrahlungskollektoranordnung (2a) eine rotationssymmetrische Sonnenstrahlungskollektoroberfläche (2a') umfasst, deren horizontaler Querschnitt sich entlang der vertikalen Mittellinie (s) im Wesentlichen konisch oder halbkugelförmig nach oben verringert, wobei die kombinierte Solar- und Windenergiekollektorvorrichtung zur Umwandlung von Sonnenstrahlung in Wärme und Elektrizität anwendbar ist, wobei die Sonnenstrahlungskollektoranordnung (2a) der Solareinheit (2) eine Solarzellenanordnung (2a1) auf der Sonnenstrahlungskollektoroberfläche (2a') umfasst, und wobei die Vorrichtung ferner einen hohlen Flüssigkeitsraum (x) innerhalb der Sonnenstrahlungskollektoranordnung (2a) umfasst, um durch Sonnenstrahlung erzeugte Wärme im inneren Flüssigkeitsraum in Flüssigkeit wie Wasser zurückzugewinnen, wobei die Sonnenstrahlungskollektoranordnung (2a) eine Rohrleitung (2a3) umfasst, die mit dem inneren Flüssigkeitsraum (x) gekoppelt ist und in einem stationären Rahmen (1a") der Windeinheit (1) zum Entfernen von wärmerer Flüssigkeit von der Oberseite des inneren Flüssigkeitsraums und zum Einbringen von kälterer Flüssigkeit in den Boden des inneren Flüssigkeitsraums verläuft, **dadurch gekennzeichnet, dass** die kombinierte Solar- und Windenergiekollektorvorrichtung auf einer Pflanzenkultivierungsvorrichtung angeordnet ist, und der innere Flüssigkeitsraum durch einen Kanal mit einem flüssigen Wärmetauscher verbunden ist, um die durch Sonnenstrahlung erzeugte Wärme in Luft zurückzugewinnen.

2. Kombinierte Solar- und Windenergiekollektorvorrichtung nach Anspruch 1, **dadurch gekennzeichnet, dass** die Sonnenstrahlungskollektoranordnung (2a) eine Sonnenstrahlungsreflektoranordnung (2a2) umfasst, die in vertikaler Ebene zumindest teilweise um die Solareinheit (2) eine gewölbte und in drei Dimensionen konkave reflektierende Oberfläche (2a2') zum Reflektieren der Sonnenstrahlung in Richtung der Solarzellenanordnung (2a1) offenbart.

3. Kombinierte Solar- und Windenergiekollektorvorrichtung nach Anspruch 2, **dadurch gekennzeichnet, dass** die Sonnenstrahlungsreflektoranordnung (2a2), die um die Solareinheit (2) mittels vorzugsweise elektrischer Antriebsmittel (DR) drehbar (V) ist, eine Öffnung (O) aufweist, um schattenlose Strahlung auf die Solarzellenanordnung (2a1) zu ermöglichen.

4. Kombinierte Solar- und Windenergiekollektorvorrichtung nach Anspruch 3, **dadurch gekennzeichnet, dass** die Sonnenstrahlungsreflektoranordnung (2a2) Positionierungsmittel (PM) zum Aufrechterhalten der Richtung der Öffnung (O) der Sonnenstrahlungsreflektoranordnung (2a2) zur Sonne umfasst.

5. Kombinierte Solar- und Windenergiekollektorvorrichtung nach einem der vorhergehenden Ansprüche 1 bis 4, die **dadurch gekennzeichnet ist, dass** die Generatoranordnung (1b) Aktuatormittel zum Umwandeln von Rotationsenergie in Elektrizität in der Windereinheit (1) zwischen dem Rotor (1a1) der Rotoranordnung (1a) mit einer vertikalen Flügelblattanordnung und dem stationären Rahmen (1a") in der Mitte der Windeinheit (1) umfasst.

6. Kombinierte Solar- und Windenergiekollektorvorrichtung nach Anspruch 5, **dadurch gekennzeichnet, dass** das Aktuatormittel der Generatoranordnung (1b) eine Spulenanordnung zwischen dem Rotor (1a1) und dem stationären Rahmen (1a") der Windeinheit (1) umfasst.

7. Kombinierte Solar- und Windenergiekollektorvorrichtung nach einem der vorhergehenden Ansprüche 1 bis 6, die **dadurch gekennzeichnet ist, dass** die Sonnenstrahlungskollektoranordnung (2a) eine absorbierende und/oder vergrößernde (2a4) Übertragungsanordnung auf der Sonnenstrahlungskollektoroberfläche (2a') umfasst, um die Absorption der Sonnenstrahlung durch die Oberfläche der Solareinheit zu verbessern und/oder den Wärmeeffekt der auf den inneren Flüssigkeitsraum (x) gerichteten Sonnenstrahlung zu erhöhen.

8. Kombinierte Solar- und Windenergiekollektorvorrichtung nach einem der vorhergehenden Ansprüche 1 bis 7, **dadurch gekennzeichnet, dass** das eine oder die mehreren vertikalen Flügelblätter (1a1') in dem Rotor (1a1) vorzugsweise fernsteuerbare, elektrische Heizmittel (EH) umfassen, um zu verhindern, dass die Blätter gefrostet oder gefroren werden.

## Revendications

1. Appareil combiné collectant les énergies solaire et éolienne, qui a d'une manière intégrée une unité éolienne(1) pour convertir la force du vent en électricité au moyen d'un agencement de rotor (1a) et d'un agencement de générateur (1b) convertissant le mouvement de rotation (w) de l'agencement de rotor (1a) en électricité, et une unité solaire (2) pour convertir le rayonnement solaire au moins en électricité au moyen d'un agencement de collecteur de rayonnement solaire (2a), dans lequel l'agencement de rotor (1a) décrit au moins un rotor (1a1) pouvant tourner (w) autour d'un axe central vertical (d'axes centraux verticaux) de l'appareil, dans lequel l'unité solaire (2) ayant l'agencement de collecteur de rayonnement solaire (2a) est agencée au-dessus de l'unité éolienne (1), et dans lequel l'agencement de collecteur de rayonnement solaire (2a) comprend une surface de collecteur de rayonnement solaire à rotation symétrique (2a'), dont la section transversale horizontale diminue essentiellement de manière conique ou hémisphérique vers le haut le long de la ou des lignes médianes verticales, dans lequel l'appareil combiné collectant les énergies solaire et éolienne peut être utilisé pour convertir le rayonnement solaire en chaleur et en électricité, dans lequel l'agencement de collecteur de rayonnement solaire (2a) de l'unité solaire (2) comprend un ensemble cellule solaire (2a1) sur la surface de collecte de rayonnement solaire (2a'), et, dans lequel l'appareil comprend en outre un espace liquide creux (x) à l'intérieur de l'agencement de collecteur de rayonnement solaire (2a) afin de récupérer la chaleur issue du rayonnement solaire dans l'espace liquide interne en liquide, tel que de l'eau, dans lequel l'agencement de collecteur de rayonnement solaire (2a) comprend une tuyauterie (2a3) couplée à l'espace liquide interne (x) et passant à l'intérieur d'un cadre fixe (1a") de l'unité éolienne (1) pour éliminer un liquide plus chaud du haut de l'espace liquide interne et pour apporter un liquide plus froid au fond de l'espace liquide interne **caractérisé en ce que**, l'appareil combiné collectant les énergies solaire et éolienne est agencé au-dessus d'un appareil de culture de plantes et l'espace liquide interne est relié par un canal avec un échangeur de chaleur à liquide pour récupérer la chaleur issue du rayonnement solaire dans l'air.

2. Appareil combiné collectant les énergies solaire et éolienne selon la revendication 1, **caractérisé en ce que**, l'agencement de collecteur de rayonnement solaire (2a) comprend un ensemble réflecteur de rayonnement solaire (2a2) décrivant dans un plan vertical au moins partiellement autour de l'unité solaire (2) une surface réfléchissante concave arquée et en trois dimensions (2a2') pour réfléchir le rayonnement solaire vers l'ensemble cellule solaire (2a1).

3. Appareil combiné collectant les énergies solaire et éolienne selon la revendication 2, **caractérisé en ce que**, l'ensemble réflecteur de rayonnement solaire (2a2), pouvant tourner (V) autour de l'unité solaire (2) au moyen de moyens d'entraînement (DR), de préférence électrique, comprenant une ouverture (O) afin de rendre possible un rayonnement sans effet d'ombre sur l'ensemble cellule solaire (2a1).

4. Appareil combiné collectant les énergies solaire et éolienne selon la revendication 3, **caractérisé en ce que**, l'ensemble réflecteur de rayonnement solaire (2a2) comprend des moyens de positionnement (PM) pour maintenir la direction de l'ouverture (O) de l'ensemble réflecteur de rayonnement solaire (2a2) vers le soleil.

5. Appareil combiné collectant les énergies solaire et éolienne selon l'une quelconque des revendications 1 à 4 précédentes, **caractérisé en ce que**, l'agencement de générateur (1b) comprend des moyens d'actionneur pour convertir l'énergie de rotation en électricité dans l'unité éolienne (1) entre le rotor (1a1) de l'agencement de rotor (1a), ayant un ensemble pale à ailettes verticale, et le cadre fixe (1a") au centre de l'unité éolienne (1).

6. Appareil combiné collectant les énergies solaire et éolienne selon la revendication 5, **caractérisé en ce que**, les moyens d'actionneur de l'agencement de générateur (1b) comprennent un ensemble bobine entre le rotor (1a1) et le cadre fixe (1a") de l'unité éolienne (1).

7. Appareil combiné collectant les énergies solaire et éolienne selon l'une quelconque des revendications 1 à 6 précédentes, **caractérisé en ce que**, l'agencement de collecteur de rayonnement solaire (2a) comprend un ensemble de transmission absorbant et/ou grossissant (2a4) au-dessus de la surface de collecteur de rayonnement solaire (2a') afin d'améliorer l'absorption de rayonnement solaire par la surface d'unité solaire et/ou d'augmenter l'effet de chauffage du rayonnement solaire dirigé au niveau de l'espace liquide interne (x).

8. Appareil combiné collectant les énergies solaire et éolienne selon l'une quelconque des revendications 1 à 7 précédentes, **caractérisé en ce que**, les une ou plusieurs pales à ailettes verticales (1a1') dans le rotor (1a1) comprennent des moyens de chauffage électrique (EH) pouvant de préférence être commandés à distance afin d'éviter que les pales ne givrent ou ne gèlent.
